# FASCICULE DE BREVET EUROPEEN

(11) **EP 2 455 923 B1**
(45) Date de publication et mention de la délivrance du brevet: **05.12.2018**
(21) Numéro de dépôt: 11186761.0
(22) Date de dépôt: 26.10.2011
(51) Int. Cl.: G07F 7/10, G06Q 20/00

(54) **Serveur de transaction NFC**
NFC-Transaktionsserver
NFC transaction server

(30) Priorité: 17.11.2010 FR 1004473; 17.11.2010 FR 1004475
(43) Date de publication de la demande: 23.05.2012
(73) Titulaire: Inside Secure, 13590 Meyreuil (FR)
(72) Inventeur: Charrat, Bruno, 13090 AIX EN PROVENCE (FR)
(74) Mandataire: Marchand, André

(56) Documents cités:
- EP-A1- 2 009 605
- WO-A1-2009/039419
- WO-A2-2009/091117
- GB-A- 2 457 221
- US-A1- 2008 048 022
- US-A1- 2010 044 444
- US-A1- 2010 153 721
- US-B2- 7 469 151
- GEETHAPRIYA VENKATARAMANI ET AL: "Mobile phone based RFID architecture for secure electronic Payments using RFID credit cards", AVAILABILITY, RELIABILITY AND SECURITY, 2007. ARES 2007. THE SECOND IN TERNATIONAL CONFERENCE ON, IEEE, PI, 1 avril 2007 (2007-04-01), pages 610-620, XP031079637, ISBN: 978-0-7695-2775-8
- LU ET AL: "Network smart card review and analysis", COMPUTER NETWORKS, ELSEVIER SCIENCE PUBLISHERS B.V., AMSTERDAM, NL, vol. 51, no. 9, 29 avril 2007 (2007-04-29) , pages 2234-2248, XP022122105, ISSN: 1389-1286
- MADLMAYR G ET AL: "Managing an NFC Ecosystem", MOBILE BUSINESS, 2008. ICMB '08. 7TH INTERNATIONAL CONFERENCE ON, IEEE, PISCATAWAY, NJ, USA, 7 juillet 2008 (2008-07-07), pages 95-101, XP031289080, ISBN: 978-0-7695-3260-8
- GERALD MADLMAYR: "A mobile trusted computing architecture for a near field communication ecosystem", INTERNET CITATION, 26 novembre 2008 (2008-11-26), pages 563-566, XP002557118, Extrait de l'Internet: URL:http://delivery.acm.org/10.1145/150000 0/1497411/p563-madlmayr.pdf?ip=145.64.134. 245&acc=ACTIVE%20SERVICE&CFID=55104367&CFT OKEN=82588032&__acm__=1322135338_73f7c0ddf 4840e5a29f7832b5694e50f
- NORDLUND S: "Secure Over-The-Air Services in NFC Ecosystems", INTERNET CITATION, 20 mars 2007 (2007-03-20), XP002470503, Extrait de l'Internet: URL:http://www.nfc-research.at/fileadmin/c ongress/pdf/05_Venyon_Sirpa_Nor dlund.pdf [extrait le 2008-02-25]

## Description

La présente invention concerne un procédé et un système de transaction à champ proche.

Ces dernières années l'apparition des techniques de communication sans contact par couplage inductif, également appelées techniques de communication à champ proche NFC ("Near Field Communication"), ont transformé le monde de la carte à puce en permettant dans un premier temps de réaliser des cartes de paiement sans contact puis, dans un second temps, d'intégrer un processeur sécurisé et un contrôleur NFC dans des objets portables électroniques tels les téléphones mobiles, pour conduire des transactions à champ proche au moyen de ces derniers.

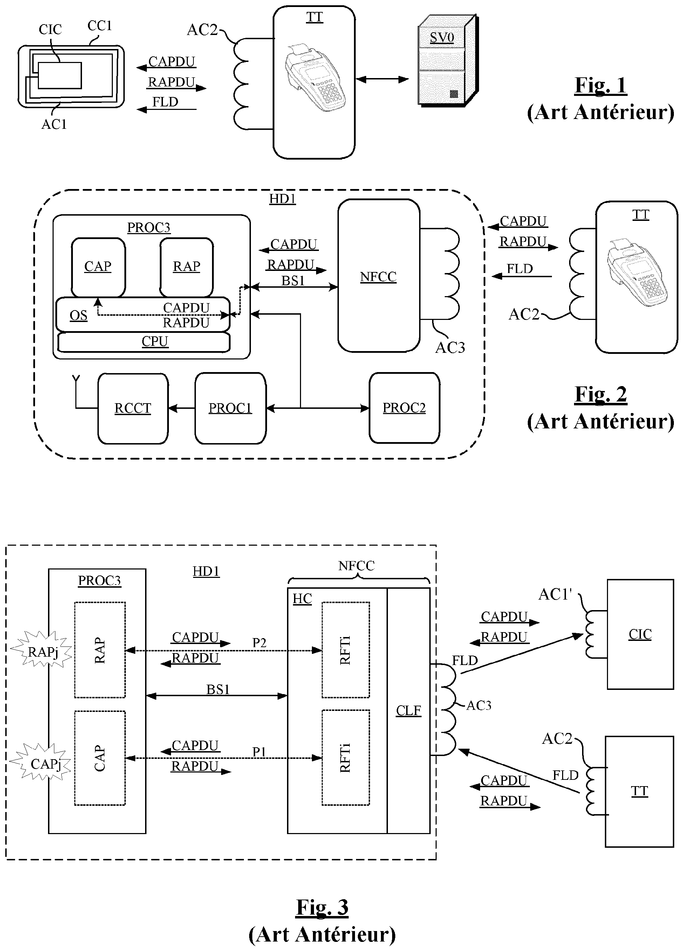

La figure 1 représente schématiquement un système de transaction classique comprenant une carte à puce sans contact CC1 et un terminal de transaction TT. Le terminal TT est par exemple un point de retrait d'argent, un point de vente de produits (distributeur de tickets, distributeur de produits consommables,...), un terminal de contrôle d'accès payant avec débit automatique (borne d'accès au métro, borne de paiement d'autobus, etc.).

La carte sans contact CC1 comprend un circuit intégré sans contact CIC ("Contactless Integrated Circuit") équipé d'un processeur sécurisé et d'une bobine d'antenne AC1 connectée au circuit intégré. Le terminal TT comprend lui-même une bobine d'antenne AC2 et est configuré pour conduire une transaction à champ proche avec la carte CC1 en émettant un champ magnétique FLD. La transaction comprend l'échange d'unités de données de protocole d'application APDU ("Application Protocol Data Unit") qui seront appelées dans ce qui suit "données d'application" dans un souci de simplicité. Les données d'application APDU comprennent des commandes CAPDU envoyées par le terminal et des réponses RAPDU envoyées par la carte. Le terminal TT peut se relier en temps réel ou en temps différé à un serveur de transaction SV0, pour valider un paiement et/ou débiter un compte de l'utilisateur.

La figure 2 représente schématiquement un système de transaction comprenant un téléphone mobile HD1 et le terminal de transaction TT. Le téléphone HD1 comporte un processeur principal PROC1, un circuit de radiocommunication RCCT, un processeur sécurisé PROC2 de carte SIM ("Subscriber Identity Module"), un contrôleur NFC désigné "NFCC", une bobine d'antenne AC3 reliée au contrôleur NFCC et un processeur sécurisé PROC3 configuré pour conduire des transactions NFC.

Le processeur PROC3 comprend une unité centrale de traitement CPU, un système d'exploitation OS, un programme application carte CAP ("Card Application") et/ou un programme application lecteur RAP ("Reader application"). Le processeur PROC3 est relié au contrôleur NFCC par un bus BS1, par exemple un bus SWP ("Single Wire Protocol"). En pratique, le processeur PROC3 peut prendre la forme d'une carte à circuit intégré UICC ("Universal Integrated Circuit Card"), par exemple de type mini-SIM ou micro-SIM.

Un exemple d'architecture fonctionnelle du contrôleur NFCC et du processeur PROC3 est représenté sur la figure 3. Le contrôleur NFCC comprend un contrôleur hôte HC et une interface sans contact CLF ("Contactless Front End Interface") qui est reliée à la bobine d'antenne AC3. En pratique, le contrôleur hôte HC et l'interface CLF peuvent être intégrés dans la même puce de semi-conducteur, telle la puce MicroRead® commercialisée par la demanderesse.

Le bus BS1 reliant le processeur PROC3 et le contrôleur NFCC sert de support physique à une interface de communication dite "HCI" ("Host Controller Interface") par l'intermédiaire de laquelle le contrôleur NFCC et le processeur PROC3 échangent des données conformément à un protocole dit "HCP" ("Host Controller Protocol"). L'interface HCI et le protocole HCP sont décrits dans les spécifications ETSI TS 102 622 de l'Institut Européen des Normes de Télécommunication, intitulées "Smart Cards ; Universal Integrated Circuit Card (UICC) ; Contactless Front-end (CLF) interface ; Host Controller Interface (HCI)". Le protocole HCP prévoit un routage des données selon des canaux de routage appelés "pipes" ("tuyaux"), par l'intermédiaire desquels des données d'application APDU sont échangées au cours d'une transaction entre le processeur PROC3 et terminal de transaction TT.

L'interface CLF peut généralement opérer selon plusieurs technologies RF désignées "RFTi" sur la figure 3, par exemple "Type A" ou "Type B" telles que définies par ISO/IEC 14443 parties 2, 3 et 4, "Type B'" telle que définie par ISO/IEC 14443-2, avec un tramage normalisé ("standard framing") tel que défini par ISO/IEC 14443-3, et "Type F" telle que définie par ISO 18092 en tant que mode passif à 212 et 424 kilooctets par seconde) ou par la norme industrielle japonaise JIS X 6319-4.

Lors de l'exécution de l'application carte CAP, le processeur PROC3 émule une carte sans contact et utilise le contrôleur NFCC en mode passif pour conduire une transaction avec un terminal de transaction TT qui émet le champ magnétique FLD. Un canal P1 est tout d'abord ouvert entre l'application carte CAP et l'interface CLF du contrôleur NFCC, qui est configurée à cette occasion dans une technologie RFTi. Le terminal TT envoie au contrôleur NFCC des commandes CAPDU que ce dernier transmet au processeur PROC3 par l'intermédiaire du canal P1. Le processeur PROC3 émet des réponses RAPDU qui sont transmises au contrôleur NFCC par l'intermédiaire du canal P1, puis sont transmises au terminal TT par le contrôleur NFCC, par l'intermédiaire d'un canal RF.

Lors de l'exécution de l'application lecteur RAP, le processeur PROC3 conduit une transaction avec un circuit intégré sans contact CIC agencé dans une carte sans contact CC1 ou autre support. Le contrôleur NFCC est dans un mode de fonctionnement actif où il émet un champ magnétique FLD. Un canal P1 est tout d'abord ouvert entre l'application lecteur RAP et l'interface CLF du contrôleur NFCC, qui est configurée à cette occasion dans une technologie RFTi. L'application lecteur RAP émet ensuite des commandes CAPDU qui sont transmises au contrôleur NFCC par l'intermédiaire du canal P2 puis sont transmises au circuit intégré CIC par l'intermédiaire d'un canal RF. Le circuit intégré sans contact CIC renvoie au contrôleur NFCC des réponses RAPDU que ce dernier transmet au processeur PROC3 par l'intermédiaire du canal P2.

Il est connu que le développement de la technologie NFC est étroitement lié au développement des applications carte dans les dispositifs portables tels les téléphones mobiles, afin d'utiliser de tels dispositifs portables comme des cartes à puce sans contact. Bien que des infrastructures équipées de terminaux de transaction NFC existent déjà, notamment dans le domaine du paiement, l'intégration de processeurs sécurisés dans les téléphones mobiles pour exécuter de telles applications ne s'effectue pas à une cadence suffisante pour permettre le développement espéré de la technologie NFC.

Une contrainte qui freine ce développement est la complexité et le coût d'un processeur sécurisé tel que le processeur PROC3 représenté sur les figures 2 et 3. Celui-ci doit de préférence pouvoir exécuter diverses applications carte et doit donc contenir autant de clés bancaires (clés de cryptographie) que d'applications carte fournies par des banques différentes. Il doit de plus présenter une puissance de calcul suffisante pour réaliser des calculs cryptographique complexes pendant la phase d'authentification d'une transaction. De plus, la personnalisation du processeur, c'est-à-dire le chargement d'une application carte CAP dans sa mémoire, est une opération complexe devant être hautement sécurisée et nécessitant des intervenants externes tels qu'un Gestionnaire de Service de Confiance "TSM" ("Trusted Service Manager"). Enfin, en cas de vol du téléphone ou pendant une opération de maintenance du téléphone, le processeur PROC3 est susceptible d'attaque par un fraudeur afin de découvrir les clés bancaires qu'il comporte.

Le document US2008/0048022 A1 décrit un système de transaction comprenant un terminal mobile recevant une application de portefeuille électronique, un serveur recevant une application de portefeuille électronique correspondante ou de de gestion de compte de portefeuille électronique correspondante, et un terminal de transaction. L'application de portefeuille électronique du terminal mobile conduit une transaction avec le dispositif de transaction, la transaction pouvant comprendre un échange de données sécurisées entre le portefeuille électronique du terminal mobile et le compte de portefeuille électronique dans le serveur.

Le document GB 2 457 221 A décrit un procédé d'administration à distance du contenu d'un serveur web hébergé par une carte SIM de type "Smart Card Web Server" ("SCWS") d'un terminal portable. Le terminal portable comprend une interface de communication sans contact comprenant une antenne NFC et des circuits de communication NFC, une application pour téléphone mobile prévue pour un environnement Java ME, et un navigateur. Le procédé d'administration à distance de la carte SIM SCWS comprend des étapes de connexion de la carte à un serveur d'administration distant, selon le protocole http, par l'intermédiaire d'un agent d'administration. Le contenu géré du serveur web hébergé par la carte SIM peut comprendre des applications NFC.

Le document WO 2009/091117 A2 décrit un procédé pour partager une information concernant des dispositifs de stockage qui sont physiquement ou électriquement connectés à un terminal de type téléphone mobile. Les dispositifs de stockage peuvent être une carte SIM, un dispositif USB, ou autre. Ce procédé consiste à stocker dans l'un des dispositifs de stockage une information relative à l'existence de l'autre dispositif de stockage, et vice-versa, et à faire interagir les dispositifs de stockage pour l'exécution d'applications. Dans un mode de réalisation, un dispositif de stockage reçoit une information du terminal et détermine qu'une application déterminée peut être exécutée par l'autre dispositif de stockage, à qui il adresse une demande de lancement de l'application.

Le document US 2010/0153721 A1 décrit un dispositif mobile équipé d'un module d'élément sécurisé virtuel ("secure element" virtuel) configuré pour accéder à un serveur d'élément sécurisé distant, le module d'élément sécurisé virtuel étant configuré pour accéder au serveur d'élément sécurisé distant depuis le dispositif électronique portable, afin de fournir un niveau de sécurité prédéterminé dans la conduite de transactions sécurisées.

Le document WO 2009/039419 décrit une carte à puce sans contact comportant un émetteur-récepteur de réseau personnel, tel que Bluetooth, pour coupler la carte à puce avec un dispositif mobile, et un émetteur-récepteur de communication en champ proche et d'identification par radiofréquence, pour coupler la carte à puce sans contact à un dispositif de transaction. La carte comprend un transpondeur équipé d'un élément sécurisé permettant d'initier des communications sécurisées avec le dispositif mobile.

Il pourrait donc être souhaité de prévoir un procédé permettant de conduire une transaction NFC au moyen d'un dispositif portable de type téléphone mobile ayant une architecture plus simple et moins coûteuse à mettre en oeuvre que les architectures connues.

Des modes de réalisation de l'invention concernent un procédé pour conduire une transaction avec un premier dispositif de transaction, tel que défini par la revendication 1.

D'autres modes de réalisation de l'invention concernent un système de transaction à champ proche, tel que défini par la revendication 7.

Des modes de réalisation d'un système et d'un procédé de transaction selon l'invention seront décrits à titre non limitatif en relation avec les figures jointes, parmi lesquelles :
- la figure 1 précédemment décrite représente un système de transaction NFC classique comprenant une carte à puce sans contact,
- la figure 2 précédemment décrite représente un système de transaction NFC classique comprenant un dispositif portable équipé d'un processeur de transaction sécurisé,
- la figure 3 précédemment décrite est un schéma fonctionnel du système de transaction de la figure 2,
- la figure 4 représente un mode de réalisation d'un système de transaction NFC selon l'invention,
- la figure 5 montre des étapes d'une transaction NFC réalisée au moyen du système de la figure 4,
- la figure 6 montre plus en détail certaines étapes de la transaction,
- la figure 7 montre un mode de réalisation d'un procédé de déclaration d'un utilisateur auprès du système de transaction de la figure 4,
- la figure 8 montre un mode de réalisation d'un procédé d'activation d'une application avant sa mise en oeuvre dans le système de transaction représenté sur la figure 4,
- la figure 9 représente un autre mode de réalisation d'un système de transaction NFC selon l'invention, et
- la figure 10 montre des étapes d'une transaction NFC réalisée au moyen du système de la figure 9.

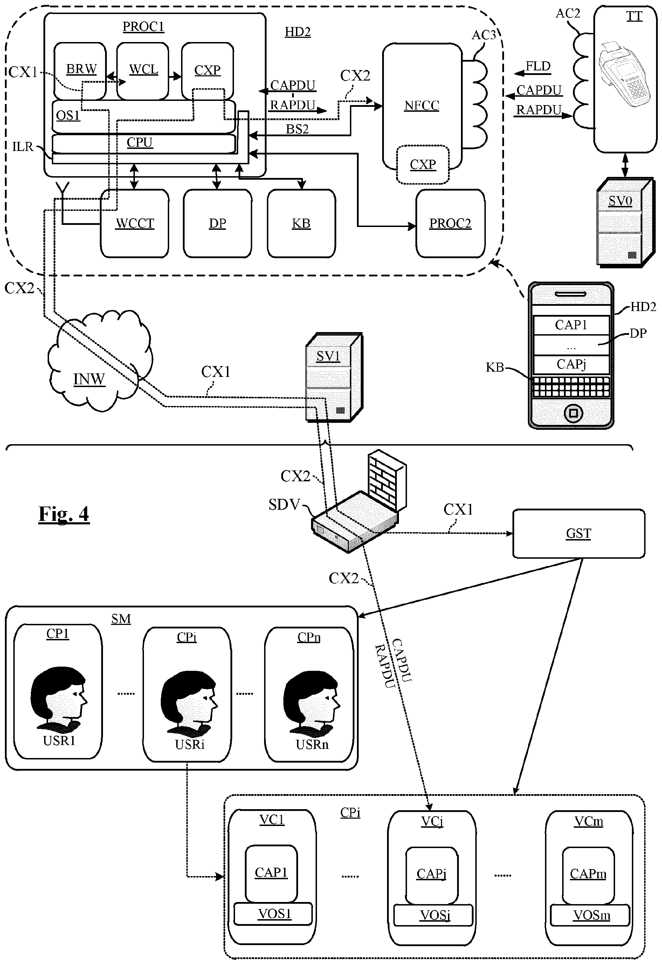

La figure 4 représente un mode de réalisation d'un système de transaction selon l'invention. Le système comprend un terminal TT de transaction, un dispositif portable HD2 et un serveur de transaction SV1 connecté au réseau Internet.

Le terminal TT, équipé d'une bobine d'antenne AC2, est configuré pour conduire une transaction NFC avec une carte sans contact NFC telle que celle représentée en figure 1 ou un dispositif HD1 tel que celui représenté en figure 2.

Le dispositif HD2 comprend un processeur principal PROC1, un afficheur DP, un clavier KB (pouvant être virtuel et présenté par l'afficheur), un contrôleur NFC "NFCC" équipé d'une bobine d'antenne AC3 pour établir une communication à champ proche avec le terminal TT, et un circuit de communication sans fil WCCT pour permettre au dispositif HD2 de se connecter au réseau Internet INW.

Le dispositif HD2 peut être un téléphone, un PDA (Assistant Personnel), un lecteur de fichiers MP3, ou tout autre dispositif portable équipé de moyens de connexion au réseau Internet. S'il forme un téléphone, le dispositif HD2 comporte également un processeur sécurisé PROC2 de carte SIM autorisant l'abonné à utiliser le réseau téléphonique GSM. Le circuit WCCT peut être un circuit de radiotéléphonie permettant une connexion au réseau Internet via le réseau GSM, par exemple une connexion LTE ("Long Term Evolution") ou GSM 4G, une carte Wifi, ou tout autre moyen de connexion sans fil au réseau Internet.

Le processeur PROC1 peut être le processeur principal du dispositif HD2, par exemple un processeur bande de base si le dispositif HD2 est un téléphone mobile, ou un processeur auxiliaire. Le processeur PROC1 comprend une unité centrale de traitement CPU, une interface de communication ILR, un système d'exploitation OS1.

Le circuit d'interface de communication ILR, représenté schématiquement sous forme de bloc, comprend l'ensemble des ports de connexion du processeur et des couches logicielles de gestion de protocoles de communication correspondants.

Le processeur PROC1 est relié au contrôleur NFCC, au processeur PROC2, au circuit WCCT, au clavier KB et à l'afficheur DP par l'intermédiaire du circuit d'interface ILR. Plus particulièrement, le processeur PROC1 est relié au contrôleur NFCC par l'intermédiaire d'un bus BS2 et d'un port correspondant du circuit d'interface ILR. Le bus BS2 est par exemple un bus de données I2C ("Inter Integrated Circuit") ou SPI ("Serial Peripheral Interface").

Le serveur SV1 est configuré pour offrir des services de transaction à des utilisateurs USRi (USR1, ...USRn). Il comprend un dispositif de sécurité SDV, un programme GST de gestion de services de transaction et une zone mémoire SM dédiée au stockage de données et de programmes de transaction. La zone mémoire SM est divisée en secteurs comprenant chacun un portefeuille de cartes CPi (CP1,...CPn). Chaque secteur formant un portefeuille de cartes CPi est alloué à un utilisateur USRi et comprend des sous-secteurs recevant des cartes virtuelles VCj (VC1,...VCm). Chaque utilisateur USRi abonné aux services de transaction proposés par le serveur SV1 dispose d'une ou de plusieurs cartes virtuelles VCj au sein du portefeuille de cartes CPi qui lui est attribué. Chaque carte virtuelle VCj est configurée pour conduire au moins une transaction correspondant à un service, et ainsi émuler une carte de paiement d'un type déterminé, par exemple une carte de paiement de métro, d'autobus, une carte de paiement de supermarché, ou plus généralement une carte bancaire permettant d'effectuer des retraits d'argent ou de paiements. Une carte virtuelle VCj forme ainsi l'équivalent d'une carte matérielle, en combinaison avec le dispositif portable HD2. Un portefeuille de cartes CPi forme ainsi l'équivalent d'un portefeuille matériel dans lequel l'utilisateur rangerait une ou plusieurs cartes matérielles.

Chaque carte virtuelle VCj (VC1,...VCm) comporte un système d'exploitation virtuel VOSj (VOS1,...VOSm) et au moins une application carte CAPj (CAP1,...CAPm). Vue sous l'angle du protocole transactionnel, chaque carte virtuelle VCj est l'équivalent fonctionnel d'un processeur sécurisé classique PROC3 du type précédemment décrit en relation avec la figure 2, réalisé dans l'art antérieur sous forme de puce de semi-conducteur.

Dans un mode de réalisation, le système d'exploitation virtuel VOSj est un programme qui émule un système d'exploitation OS de processeur sécurisé classique PROC3, tandis que l'application carte CAPj est un programme de transaction classique exécutable aussi bien par un processeur sécurisé classique PROC3 que par un système d'exploitation virtuel VOSj.

Dans un mode de réalisation équivalent, le système d'exploitation virtuel VOSj n'émule pas un système d'exploitation OS de processeur sécurisé classique. L'application carte CAPj n'est pas exécutable par un processeur sécurisé classique et est uniquement exécutable par le système d'exploitation virtuel VOSj. Le système d'exploitation virtuel VOSj et l'application carte CAPj sont des programmes spécifiques configurés pour fonctionner en combinaison et former, ensemble, l'équivalent d'un processeur sécurisé classique PROC3 équipé d'une application carte en ce qui concerne la conduite d'une transaction.

Dans encore un autre mode de réalisation équivalent, le système d'exploitation virtuel VOSj est inclus dans l'application carte CAPj, les deux programmes n'en formant qu'un seul.

Dans un mode de réalisation mettant la priorité sur l'optimisation de l'espace mémoire du serveur, les systèmes d'exploitation virtuels VOSj et les applications cartes CAPj des différentes cartes virtuelles VCj sont émulés par un ou plusieurs programmes centralisés exécutés par le serveur SV1 en mode multitâche. Par exemple, un premier programme central émule plusieurs systèmes d'exploitation à la fois et un second programme central émule la même application carte pour plusieurs cartes virtuelles à la fois.

Dans un mode de réalisation préféré mettant la priorité sur la sécurité contre la fraude, la zone mémoire SM contient autant de systèmes d'exploitation virtuels VOSj et d'applications cartes CAPj que de cartes virtuelles VCj. En d'autres termes, les secteurs de la zone mémoire SM contenant les portefeuilles, et d'autre part les sous-secteurs contenant les cartes virtuelles sont entièrement cloisonnés les uns relativement aux autres et ne comportent aucun programme partagé fonctionnant en mode multitâche.

Dans un mode de réalisation, chaque application carte CAPj utilise une clé de cryptographie Kj(CAPj) lui permettant de répondre à des demandes d'authentification nécessitant un calcul cryptographique. Dans le mode de réalisation mettant l'accent sur la sécurité et le cloisonnement des secteurs et des sous-secteurs de la zone mémoire SM, la clé Kj est stockée dans le sous-secteur de la zone mémoire SM recevant la carte mémoire VCj qui exécute cette application, c'est-à-dire recevant le système d'exploitation virtuel VOSj et l'application carte CAPj formant ensemble la carte virtuelle.

Le dispositif de sécurité SDV protège le serveur et notamment l'accès à la zone mémoire SM et au programme de gestion de services de transaction GST. Le dispositif SDV peut être purement logiciel et exécuté par le serveur SV1, ou comprendre une partie matérielle (hardware) distincte de la partie matérielle du serveur et une partie logicielle exécutée par le serveur ou par la partie matérielle distincte. Il inclut de préférence une fonction de pare-feu et de détection d'une tentative d'accès frauduleux à une application carte.

Le programme de gestion de services de transaction GST, désigné dans ce qui suit "gestionnaire de services", assure la création, l'activation, la mise à jour et la suppression des cartes virtuelles VCj, avec l'aide du dispositif de sécurité SDV qui lui accorde ou non les autorisations à cet effet.

Le serveur SV1 utilise le dispositif HD2 comme une interface NFC distante permettant à une carte virtuelle VCi de réaliser une transaction avec le terminal TT. A cet effet, le processeur PROC1 comporte, dans une mémoire programme, un programme navigateur Internet BRW ("Browser"), un programme WCL désigné "client web" et un programme de connexion CXP. Le client web WCL est configuré pour établir une liaison de données CX1 avec le serveur SV1 par l'intermédiaire du navigateur BRW, du circuit de communication WCCT (connexion par téléphonie LTE par exemple, ou connexion Wifi) et du réseau Internet INW. Une fois connecté au serveur, le client web WCL dialogue avec le dispositif de sécurité SDV ou avec le gestionnaire de services GST, et présente à l'utilisateur des pages web, des informations ou des demandes d'information émises par ces derniers.

La liaison de données CX1 permet au client web WCL de dialoguer avec le dispositif de sécurité SDV et le gestionnaire de services GST, et est représentée en traits pointillés sur la figure 4. La liaison de données CX1 est de préférence une connexion sécurisée utilisant par exemple la technologie classique SSL ("Secure Sockets Layers") reposant sur un procédé de cryptographie à clef publique avec établissement d'un canal de communication chiffré après une étape d'authentification.

Le programme de connexion CXP est configuré pour assurer l'établissement d'une seconde liaison de données CX2 entre le contrôleur NFCC et une carte virtuelle VCj, par l'intermédiaire du bus BS2, du circuit de communication WCCT et du réseau Internet INW. Dans un mode de réalisation, la liaison de données CX2 est établie après réception d'une requête de connexion émise par le client web WCL ou par le navigateur BRW. Dans un autre mode de réalisation, la liaison de données CX2 est établie de manière permanente entre le contrôleur NFCC et le dispositif de sécurité SDV. Le dispositif SDV rend la liaison de données CX2 accessible à une carte virtuelle VCj au moment où la carte virtuelle doit conduire une transaction.

A l'instar de la liaison de données CX1, la liaison de données CX2 est de préférence sécurisée. La liaison de données CX2 est par exemple formée via des canaux de communication http ("HyperText Transfer Protocol", ou "Protocole de Transfert Hypertexte) ou via une liaison UDP de bas niveau ("User Datagram Protocol" ou "Protocole de Datagramme Utilisateur") afin de limiter la charge d'échange de données. La liaison de données CX2 peut également être encryptée avec la technologie SSL ou au moyen d'un encodage propriétaire.

Dans encore une autre variante, le contrôleur NFCC est équipé de moyens de connexion au réseau Internet et un système de chiffrement propriétaire est prévu dans sa mémoire programme. Cette méthode permet de réaliser un tunnel chiffré point à point entre le serveur SV1 et le contrôleur NFCC et offre un niveau de sécurité très élevé et non attaquable par un logiciel espion qui aurait été inséré dans la mémoire programme du processeur PROC1. Dans un tel mode de réalisation, le programme de connexion CXP peut être agencé dans la mémoire programme du contrôleur NFCC, comme représenté schématiquement par des traits pointillés sur la figure 4. Dans ce cas, le bus BS2 est utilisé pour permettre au programme WCL d'envoyer au contrôleur NFCC une demande de connexion au serveur SV1 au début d'une étape de transaction S10 décrite plus loin. Un bus de données supplémentaire peut être prévu pour relier directement le contrôleur NFCC au circuit de communication sans fil WCCT, sans passer par le processeur PROC1.

Dans encore une autre variante, un coprocesseur dédié à l'établissement et au chiffrement de la communication est prévu. Ce coprocesseur est relié au contrôleur NFCC et au circuit de communication sans fil WCCT et permet à une application carte CAPj de prendre le contrôle du contrôleur NFCC sans dépendre du logiciel du processeur PROC1 et d'un éventuel programme espion que celui-ci pourrait comporter.

Dans encore une autre variante, le dispositif portable HD2 ne comporte qu'un seul processeur assurant à la fois le contrôle des organes du dispositif HD2 et le contrôle de transactions NFC en relation avec le serveur de transaction SV1.

En résumé, selon le mode de réalisation retenu, le programme de connexion CXP peut être inclus dans le client web WCL, être inclus dans le système d'exploitation OS1 du processeur PROC1, être inclus dans une mémoire programme ou dans le système d'exploitation du contrôleur NFCC, être exécuté par un coprocesseur dédié, ou encore être exécuté par un processeur unique remplaçant le processeur PROC1 et le contrôleur NFCC.

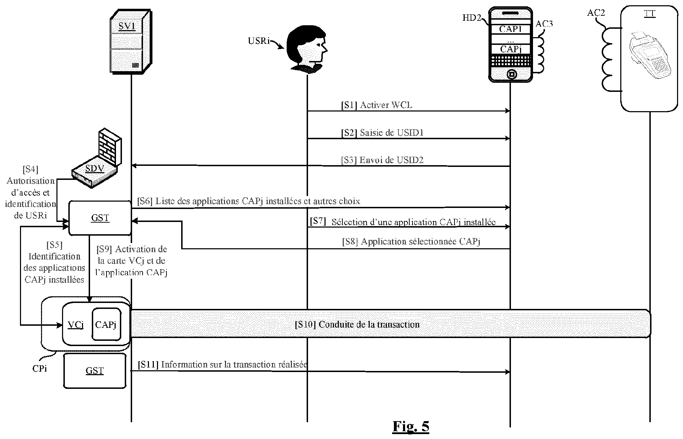

La figure 5 représente des étapes d'un mode de réalisation d'un procédé de transaction selon l'invention, mis en oeuvre au moyen du système de transaction de la figure 4.

On suppose ici qu'un utilisateur USRi se trouve à proximité du terminal TT et souhaite utiliser le dispositif portable HD2 pour effectuer une transaction. L'utilisateur active tout d'abord le programme client web WCL (étape S1), par exemple en appuyant sur une touche du clavier ou en sélectionnant un menu présenté sur l'afficheur. Le programme WCL demande alors à l'utilisateur de fournir des données d'identification USID1.

Après saisie des données USID1 (étape S2), le client web WCL se relie au dispositif de sécurité SDV via la liaison de données CX1 et lui fournit des données d'identification USID2 (étape S3). Les données USID2 comprennent tout ou partie des données d'identification USID1 et peuvent comprendre des données d'identification additionnelles telles que des données propres au dispositif HD2 que le client web prélève dans une mémoire du dispositif HD2.

Les données d'identification USID1 peuvent être variées et visent à garantir un haut niveau de sécurité. Elles peuvent comporter un "login" (nom d'utilisateur ou adresse E-mail) que l'utilisateur doit fournir ainsi qu'un mot de passe. Un code de sécurité envoyé par une banque à l'utilisateur, par exemple au moyen d'un message de type SMS, peut également être inclus dans les données USID1. Peuvent également être utilisées comme données d'identification USID1 des données biométriques (voix, visage, empreintes digitales...) et/ou des données dynamiques propres à l'utilisateur, par exemple des données de saisie du code de l'utilisateur (force d'appui sur le clavier, temps d'appui...). Ces données biométriques ou dynamiques permettent de vérifier, en sus de la vérification du code de l'utilisateur, que ce code a été saisi par la bonne personne.

Les données USID2 peuvent comprendre tout ou partie des données USID1 et des données supplémentaires que l'utilisateur n'a fourni qu'une fois lors de la création de son portefeuille de cartes CPi. Il peut s'agir de données d'état civil telles que la date de naissance, le numéro de carte d'identité, le numéro de passeport, l'adresse du domicile de l'utilisateur, etc. Les données USID2 peuvent également comprendre des données propres au dispositif HD2, telles que le numéro de téléphone de l'utilisateur, un numéro d'identification du dispositif, par exemple, s'il s'agit d'un téléphone, son numéro IMEI ("International Mobile Equipment Identity") et/ou le numéro de la carte SIM.

Le dispositif de sécurité SDV utilise ensuite les données USID2 pour vérifier la légitimité de la demande de connexion. Si le résultat de la vérification est positif, le dispositif SDV communique au gestionnaire de services GST l'identité de l'utilisateur USRi et une autorisation d'accès aux services (étape S4). Il ouvre également la liaison de données CX1 au gestionnaire de services GST, si cela n'a pas été fait précédemment.

Ensuite, le gestionnaire de services GST accède au portefeuille CPi de l'utilisateur et détermine si des cartes virtuelles VCj et des applications carte correspondantes CAPj y ont été installées (étape S5).

Dans l'affirmative, le gestionnaire GST présente à l'utilisateur, par l'intermédiaire du client web, une liste de services correspondant aux applications carte CAPj installées (étape S6) et lui demande de sélectionner le service qu'il souhaite utiliser pour conduire une transaction. Les services sont par exemple "accès au métro X", "paiement aux caisses du supermarché Y", "carte bancaire Z", etc. Cette page d'accueil propose également d'autres choix à l'utilisateur, notamment l'installation d'une nouvelle carte virtuelle et d'une application carte correspondante, la mise en oeuvre de cette option étant décrite plus loin.

L'utilisateur sélectionne le service désiré (étape S7) et son choix ("application carte CAPj sélectionnée") est envoyé au gestionnaire GST par le client web (étape S8).

Dans une variante des étapes S7, S8, l'utilisateur confirme seulement son souhait de réaliser une transaction sans préciser le service souhaité. Dans ce cas, l'application carte CAPj appropriée est sélectionnée automatiquement au moment de la transaction.

Le client web WCL demande ensuite au programme de connexion CXP d'établir la liaison de données CX2 entre le serveur SV1 et le contrôleur NFCC, tandis que le gestionnaire de services GST sélectionne et active la carte virtuelle VCj de l'utilisateur et l'application carte CAPj que l'utilisateur a désignée (étape S9). De son côté, l'utilisateur approche le dispositif HD2 du terminal de transaction TT pour qu'un couplage inductif s'établisse entre les bobines d'antennes AC2 et AC3. Dans une variante de réalisation, la liaison de données CX2 est préalablement établie entre le dispositif de sécurité SDV et le contrôleur NFCC, et est simplement rendue accessible à l'application carte CAPj par le dispositif SDV après l'étape S9.

La carte virtuelle VCj est alors reliée au contrôleur NFCC. Une connexion est établie avec le terminal de transaction TT et l'application carte CAPj de la carte virtuelle VCj exécute la transaction demandée (étape S10). Cette transaction peut comprendre des actions de l'utilisateur, comme l'acceptation d'un montant ou le choix d'un produit. Également, bien que cela ne soit pas représenté sur la figure 5, le terminal de transaction TT peut être relié à un serveur bancaire SV0 (Cf. Fig. 4) qui requiert des étapes d'authentification et vérifie que des réponses à des demandes d'authentification ont bien été envoyées par une application carte utilisant une clé bancaire autorisée.

Lorsque la transaction est terminée, la liaison de données CX2 est fermée, la carte virtuelle VCj est désactivée et le gestionnaire GST envoie au client web WCL des informations sur la transaction réalisée, par exemple l'objet et le montant de la transaction (étape S11). Le client web peut mémoriser et présenter ces informations à l'utilisateur.

L'homme de l'art notera que le procédé de transaction et le système de transaction qui viennent d'être décrits sont susceptibles de diverses variantes. Notamment, le client web WCL est un programme "chapeau" qui utilise des pages web ou des données fournies par le serveur SV1 pour former une interface utilisateur. Un tel programme peut ne pas être nécessaire. Dans ce cas, l'utilisateur dialogue directement avec le dispositif de sécurité SDV et le gestionnaire de services GST par l'intermédiaire de pages web que ces deux organes lui présentent par l'intermédiaire du navigateur BRW.

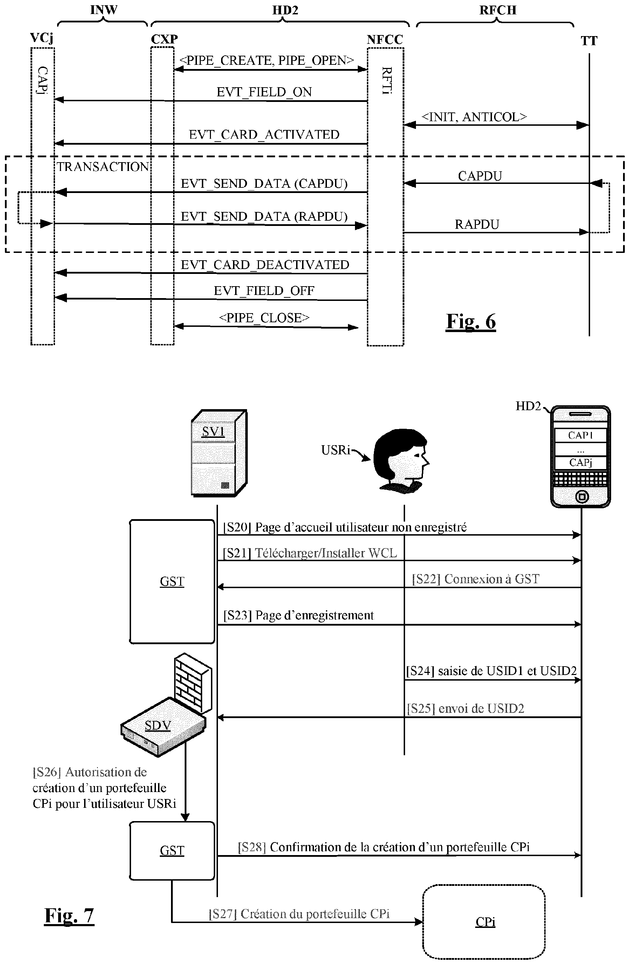

La figure 6 montre un exemple de transaction réalisée à l'étape S10. La transaction comprend les étapes suivantes :
i) Un canal P1 est créé entre la carte virtuelle VCj et une technologie RFTi exécutée par le contrôleur NFCC, au moyen de commandes "PIPE_CREATE", "PIPE_OPEN". Cette étape peut être conduite par le programme de connexion CXP, comme représenté. Alternativement, cette étape peut être conduite par la carte virtuelle VCj elle-même, si celle-ci comporte un programme de gestion de l'interface HCI, ou par le dispositif de sécurité SDV. Il sera noté que le canal P1, ici conforme au protocole HCP, est établi à travers la liaison de données CX2 qui traverse le réseau Internet et le bus BS2 ;
ii) le contrôleur NFCC détecte le champ magnétique émis par le terminal TT et envoie la commande EVT_FIELD_ON à la carte virtuelle VCj ;
iii) le contrôleur NFCC conduit des étapes d'initialisation d'une communication avec le terminal TT incluant la création d'un canal de communication NFC (désigné "RFCH" sur la figure 6, ou canal RF), ainsi que des étapes éventuelles d'anticollision si d'autres dispositifs NFC ou cartes sans contact se trouvent dans le champ d'interrogation du terminal TT (étape "INIT, ANTICOL") ;
iv) lorsque la connexion avec le terminal TT est établie, le contrôleur NFCC envoie une commande EVT_CARD_ACTIVATED à la carte virtuelle VCj pour lui indiquer qu'une transaction peut commencer.

La transaction proprement dite comprend ensuite les étapes suivantes :
- l'envoi de commandes CAPDU par le terminal TT au processeur NFCC, via le canal de communication RF,
- la transmission de ces commandes à l'application carte CAPj de la carte virtuelle VCj par le contrôleur NFCC, par l'intermédiaire du canal P1, sous une forme encapsulée dans des commandes EVT_SEND_DATA ;
- l'envoi au contrôleur NFCC, par l'application carte CAPj de la carte virtuelle VCj, de réponses RAPDU, via le canal P1, sous une forme encapsulée dans des commandes EVT_SEND_DATA, et
- la transmission des réponses RAPDU au terminal TT par le contrôleur NFCC, via le canal RF.

Les commandes CAPDU et les réponses RAPDU (habituellement désignées "C-APDU" et "R-APDU") sont définies par la norme ISO 7816-4. Dans une variante de réalisation de la transaction, l'encapsulation des commandes CAPDU et des réponses RAPDU est effectué au moyen du protocole http au lieu d'utiliser des commandes d'encapsulation EVT_SEND_DATA.

La première commande CAPDU envoyée par le terminal TT peut être une commande de sélection de l'application carte CAPj, par exemple la commande "SELECT_AID" telle que définie par la norme ISO 7816-4. Si l'application carte a été sélectionnée préalablement par l'utilisateur à l'étape S7 et si cette application ne correspond pas à celle demandée par le terminal de transaction TT, la carte virtuelle VCj renvoie un message d'erreur et la transaction est interrompue.

Dans la variante de réalisation de l'étape S7 décrite plus haut, où l'utilisateur confirme seulement son souhait de réaliser une transaction sans sélectionner une carte virtuelle déterminée, la carte virtuelle contenant l'application carte appropriée est sélectionnée automatiquement par un programme de sélection de carte inclus dans le portefeuille de cartes de l'utilisateur. Au commencement de l'étape S10, ce programme de niveau haut assure l'activation initiale de la porte d'application carte CAG et la création du canal P1 afin de recevoir la commande de sélection de l'application carte. Il active ensuite l'application carte désignée par la commande, si celle-ci est installée dans le portefeuille de cartes. Dans le cas contraire, la transaction est interrompue.

Lorsque la transaction est terminée (ou interrompue), le terminal TT cesse d'émettre le champ magnétique et le contrôleur NFCC envoie à la carte virtuelle VCj une commande EVT_CARD_DEACTIVATED de désactivation de l'application carte et une commande EVT_FIELD_OFF indiquant que le champ magnétique n'est plus présent. Le canal P1 est ensuite fermé entre la carte virtuelle VCj et le contrôleur NFCC, au moyen d'une commande "PIPE_CLOSE". Cette étape de fermeture du canal P1 peut être conduite par la carte virtuelle VCj elle-même ou par le programme de connexion CXP, comme représenté. Alternativement, cette étape peut être conduite par le dispositif de sécurité SDV. Le gestionnaire de services GST exécute ensuite l'étape S11 décrite plus haut (fig. 7).

L'homme de l'art notera que cet exemple de transaction par l'intermédiaire d'une interface HCI n'est aucunement limitatif. La connexion entre la carte virtuelle VCj et le contrôleur NFCC peut être établie au moyen de divers autres protocoles et d'autres commandes peuvent être prévues.

L'exemple de transaction qui vient d'être décrit suppose d'une part que l'utilisateur USRi bénéficie d'un portefeuille de cartes CPi et, d'autre part, que le portefeuille contienne au moins la carte virtuelle VCj nécessaire à cette transaction.

La figure 7 représente un mode de réalisation d'un procédé de création d'un portefeuille de cartes CPi. On suppose que l'utilisateur USRi se connecte d'abord au gestionnaire de services GST en tant qu'utilisateur non enregistré, via une connexion Internet. Le gestionnaire GST fournit alors au dispositif HD2 une page d'accueil pour utilisateur non enregistré, dans laquelle on propose à l'utilisateur d'adhérer aux services de transaction (étape S20). L'acceptation par l'utilisateur de cette invitation entraîne ici le téléchargement et l'installation du client web WCL dans le dispositif HD2 (étape S21). Le client web WCL se connecte au gestionnaire GST (étape S22) au moyen de la liaison de données CX1 et le gestionnaire GST envoie à l'utilisateur une page d'enregistrement (étape S23) dans laquelle divers renseignements lui sont demandés, pour former les données d'identification USID1. En sus de ces données, l'utilisateur peut être invité à communiquer ses coordonnées bancaires et toute donnée complémentaire permettant de définir les données USID2. Le client web peut également prélever dans le dispositif HD2 des données spécifiques à celui-ci, destinées à former des données USID2.

Lorsque le client web WCL dispose de l'intégralité des données USID1 et USID2 (étape S24) et des éventuels autres renseignements nécessaires à l'adhésion de l'utilisateur, il fournit les données USID2 au dispositif de sécurité SDV (étape S25). Le dispositif de sécurité SDV procède alors à une vérification des données d'identification USID2, détermine si l'utilisateur USRi peut être autorisé à disposer d'un portefeuille de cartes, puis adresse une autorisation de création du portefeuille au gestionnaire de services GST (étape S26).

Le gestionnaire GST crée alors le portefeuille CPi (étape S27). En pratique, cette création peut simplement consister en un enregistrement de l'utilisateur dans une base de données contenant les données d'identification USID2 et une table de correspondance désignant le secteur de la zone mémoire SM alloué à l'utilisateur.

Le gestionnaire GST adresse ensuite au dispositif HD2 une confirmation de création du portefeuille CPi (étape S30).

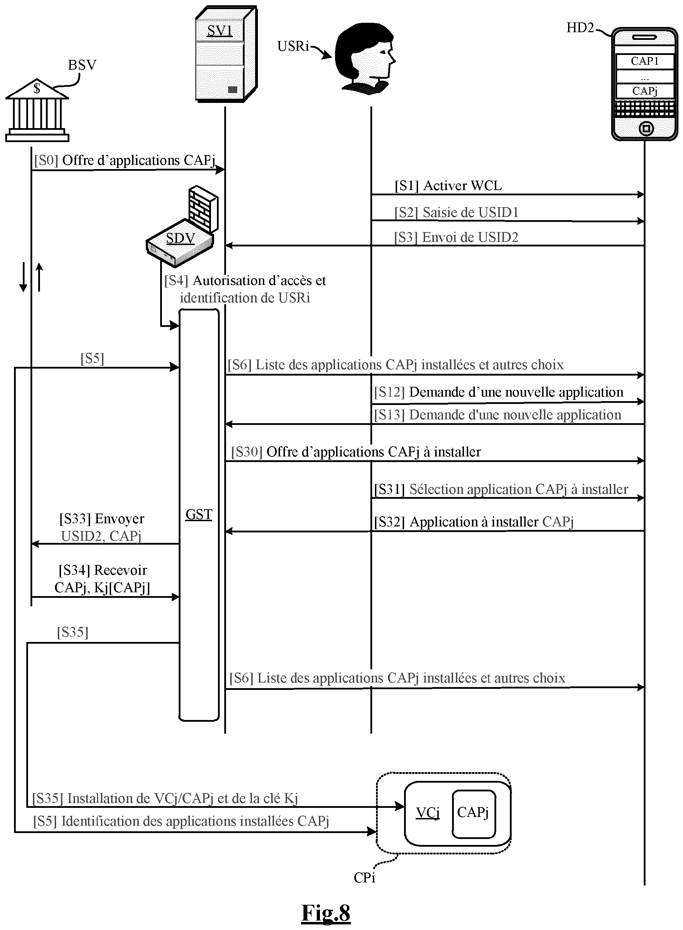

La figure 8 représente un mode de réalisation d'un procédé d'acquisition d'une carte virtuelle VCj. Ce procédé peut être engagé après l'étape S28 précédemment décrite ou, comme représenté sur la figure, après une nouvelle connexion au serveur SV1. Cette nouvelle connexion comporte les étapes précédemment décrites à savoir :
- activation du client web (étape S1),
- saisie des données USID1 (étape S2),
- envoi des données USID2 au dispositif de sécurité SDV par le client web (étape S3), pour vérifier la légitimité de la demande de connexion,
- vérification de la légitimité de la demande de connexion par le dispositif de sécurité et communication au gestionnaire GST d'une autorisation d'accès (étape S4),
- accès au portefeuille CPi par le gestionnaire GST et détermination des applications carte CAPj qui y ont été installées (étape S5),
- envoi à l'utilisateur d'une liste des applications carte CAPj installées, ainsi qu'une proposition d'installation d'une nouvelle application carte (étape S6).

On supposera ici que l'utilisateur sélectionne l'option "installation d'une nouvelle application" (étape S12) au lieu de sélectionner une application (étape S7, Fig. 5), soit parce qu'il ne possède aucune application installée soit parce qu'il souhaite en installer une nouvelle.

Le client web répercute la demande de nouvelle application au gestionnaire de services GST (étape S13). Les étapes qui suivent font intervenir un ou plusieurs serveurs bancaires, ou serveurs de certifications, ou de préférence un serveur unique de certification BSV regroupant des services d'une ou de plusieurs banques. Avant de traiter la demande d'installation d'une nouvelle application, le gestionnaire de services GST peut avoir préalablement reçu du serveur de certification BSV une offre d'applications CAPj (étape S0).

Le gestionnaire de services GST adresse ainsi au dispositif HD2 une page d'offre d'applications carte CAPj présentées sous forme d'une offre de services de transaction (étape S30).

L'utilisateur sélectionne ensuite un service de transaction, ce qui correspond à la sélection d'une application carte CAPj (étape S31). Son choix est répercuté au gestionnaire GST par le client web (étape S32).

Le gestionnaire GST adresse alors au serveur BSV les données USID2 d'identification de l'utilisateur ainsi qu'un identifiant de l'application carte CAPj demandée (étape S33), et requiert une autorisation de création de la carte virtuelle correspondante. Cette étape peut comprendre des accès multiples au serveur bancaire. Elle peut éventuellement être différée si le serveur de certification indique que l'utilisateur doit préalablement être contacté par des attachés commerciaux pour accomplir certaines formalités. Inversement, l'utilisateur peut avoir déjà accompli ces formalités et avoir fournit dans les données USID1 un code reçu de la banque, qui l'autorise à obtenir la carte.

Après vérification, le serveur BSV renvoie au gestionnaire GST le programme de l'application carte et une clé bancaire d'activation Kj(CAPj) permettant d'utiliser l'application carte (étape S34). Cette clé forme une clé de cryptographie permettant à l'application de s'authentifier auprès d'un terminal de transaction, lorsque cela lui est demandé. Le gestionnaire GST procède alors à la création de la carte virtuelle VCj dans le portefeuille CPi, y compris le cas échéant l'installation du système d'exploitation virtuel VOSj de la carte, puis à l'installation de l'application CAPj dans la carte virtuelle VCj, ainsi qu'à l'installation de la clé Kj (étape S35).

Dans une variante, diverses applications carte CAPj sont mémorisées dans un espace de stockage d'applications du gestionnaire GST et le serveur de certification ne fournit que la clé d'activation Kj.

Le gestionnaire GST retourne ensuite à l'étape S6 pour présenter à l'utilisateur une liste des applications carte CAPj installées, ainsi qu'une proposition d'installation d'une nouvelle application carte. L'utilisateur peut décider d'installer encore une nouvelle application, d'utiliser celle qui vient d'être installée ou une application précédemment installée, ou de se déconnecter du serveur SV1.

Dans une variante, le gestionnaire GST ne dispose pas d'un droit de modification des cartes virtuelles VCj et les étapes S33, S34 et S35 sont confiées au dispositif de sécurité SDV.

L'exemple de système de transaction qui vient d'être décrit est susceptible de divers autres modes de réalisation. En particulier, des modes de réalisation du système de transaction peuvent concerner la virtualisation d'un point de paiement mettant en oeuvre une application point de paiement au lieu d'une application carte. Une application point de paiement PAPj diffère d'une application carte CAPj en ce qu'elle vise à encaisser une somme d'argent par l'intermédiaire d'une transaction avec une carte à puce permettant au payeur de s'identifier.

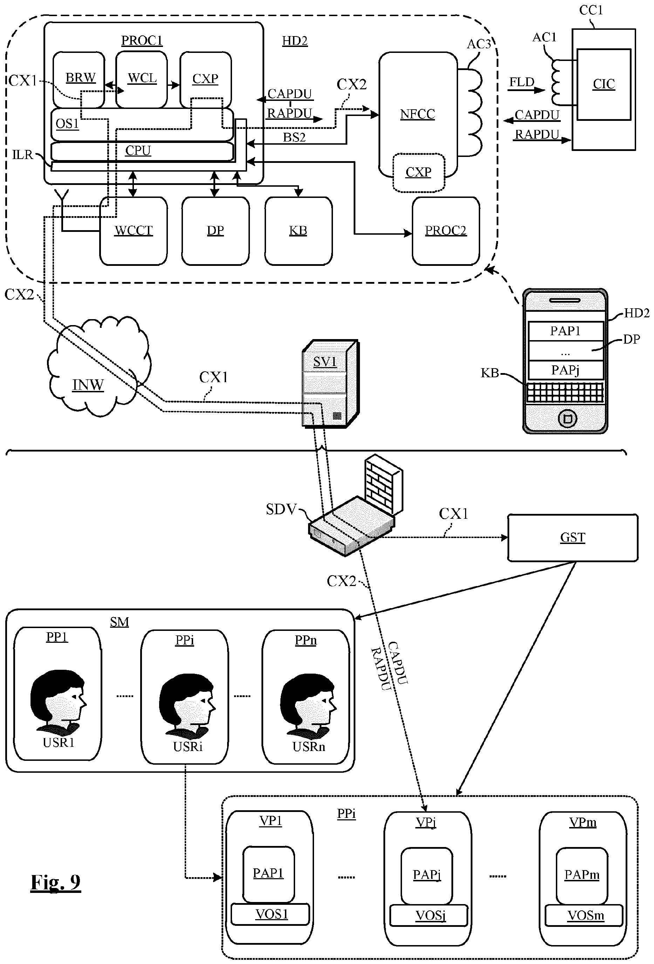

La figure 9 représente un système de transaction qui présente, par rapport à celui de la figure 4, les différences suivantes :
- le dispositif HD2, au lieu d'être agencé en face d'un terminal de transaction TT, est agencé en face d'une carte sans contact CC1 comprenant une bobine d'antenne AC1 et un circuit intégré sans contact CIC, et conduit une transaction avec celle-ci ;
- le serveur SV1, au lieu de gérer des applications cartes CAPj agencées dans des cartes virtuelles VCj, elles-mêmes agencées dans des portefeuilles de cartes CPi, gère des applications point de paiement PAPj (PAP1,...PAPm) agencées dans des points de paiement virtuels VPj (VP1,...VPm), eux-mêmes agencés dans des portefeuilles de points de paiement PPi (PP1,...PPn) attribués à des utilisateurs USRi. Chaque point de paiement virtuel peut comprendre, en sus d'une application point de paiement PAPj, un programme VOSj (VOS1,...VOSm) d'émulation d'un système d'exploitation d'un terminal de paiement, qui peut aussi être inclus dans l'application point de paiement PAPj.

Par analogie avec le système de transaction classique représenté sur la figure 1, le dispositif HD2 agit ici en tant que terminal de transaction TT. Le contrôleur NFCC émet le champ magnétique FLD nécessaire à l'établissement d'un canal de communication sans contact avec la carte CC1. Le programme application point de paiement PAPj prend le contrôle du contrôleur NFCC pour conduire la transaction. Il émet des commandes CAPDU et reçoit des réponses RAPDU. Le programme application point de paiement PAPj peut être configuré pour se connecter, pendant la transaction ou postérieurement à celle-ci, à un serveur d'autorisation bancaire tel que le serveur SV0 montré sur la figure 1.

Le procédé représenté sur la figure 5 peut être adapté à la réalisation d'une transaction en mode point de paiement, en activant à l'étape S10 une application point de paiement PAPj au lieu d'une application carte CAPj, et en recherchant à l'étape S5 les points de paiement virtuels VPj installés dans le portefeuille PPi d'un utilisateur USRi. A l'étape S6, le procédé peut comporter la présentation d'une liste d'applications point de paiement PAPj disponibles au lieu de la présentation d'une liste d'applications carte CAPj, ou une présentation des deux types de services de transaction. Enfin, le procédé représenté sur la figure 7 peut être adapté à la création d'un portefeuille de points de paiements PPi au lieu d'un portefeuille de cartes CPi. De même, le procédé représenté sur la figure 8 peut être modifié de manière que les étapes S31 à S35 se rapportent à l'installation d'une application point de paiement et d'un point de paiement virtuel.

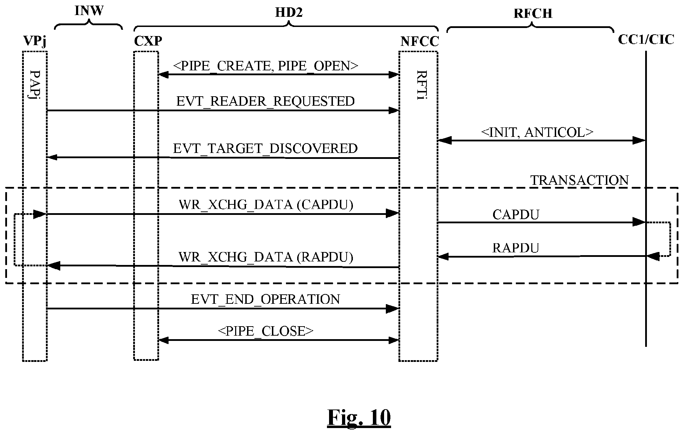

La figure 10 montre un exemple de transaction réalisée entre un point de paiement virtuel VPj et la carte sans contact CC1, qui intervient par exemple à l'étape S10 du procédé de la figure 5 adapté à la réalisation d'une transaction en mode point de paiement. La transaction comprend les étapes suivantes :
i) un canal P2 est créé entre le point de paiement virtuel VPj et une technologie RFTi exécutée par le contrôleur NFCC, au moyen de commandes "PIPE_CREATE", "PIPE_OPEN". Cette étape peut être conduite par le programme de connexion CXP, comme représenté. Alternativement, cette étape peut être conduite par le point de paiement virtuel VPj lui-même, si celui-ci comporte un programme de gestion de l'interface HCI, ou par le dispositif de sécurité SDV, avant que celui-ci ne rendre la liaison de donnée CX2 accessible au point de paiement virtuel VPj ;
ii) l'envoi au contrôleur NFCC des commandes d'interrogation EVT_READER_REQUESTED visant à détecter la présence du circuit intégré sans contact CIC (méthode d'interrogation dite "polling"). Cette étape peut être conduite par le point de paiement virtuel VPj, comme représenté. Alternativement cette étape peut être conduite par le programme de connexion CXP, ou par le dispositif de sécurité SDV, avant que celui-ci ne rendre la liaison de donnée CX2 accessible au point de paiement virtuel VPj ;
iii) lorsque le circuit intégré sans contact CIC de la carte CC1 est détecté, le contrôleur NFCC conduit des étapes "INIT, ANTICOL" d'initialisation d'une communication avec le circuit intégré sans contact CIC avec création d'un canal de communication RF (désigné RFCH sur la figure 10), et optionnellement des étapes d'anticollision (si d'autres circuits intégrés sans contact sont présents dans le champ), - le contrôleur NFCC envoie la commande EVT_TARGET_DISCOVERED au point de paiement virtuel VPj pour lui indiquer qu'une transaction peut commencer.

La transaction proprement dite comprend ensuite les étapes suivantes :
- l'envoi au contrôleur NFCC, par l'application point de paiement virtuel PAPj, de commandes CAPDU, via le canal P2, les commandes CAPDU étant encapsulées dans des commandes WR_XCHG_DATA,
- la transmission par le contrôleur NFCC des commandes CAPDU au circuit intégré sans contact CIC, par l'intermédiaire du canal RF,
- l'envoi au contrôleur NFCC, par le circuit intégré sans contact CIC, de réponses RAPDU,
- la transmission des réponses RAPDU à l'application point de paiement virtuel PAPj, par le contrôleur NFCC, via le canal P2, les réponses RAPDU étant encapsulées dans des commandes WR_XCHG_DATA.

La transaction est clôturée par l'envoi de la commande EVT_END_OPERATION au contrôleur NFCC. Cette étape peut être conduite par le point de paiement virtuel VPj, comme représenté. Alternativement cette étape peut être conduite par le programme de connexion CXP, ou par le dispositif de sécurité SDV, avant que celui-ci ne rendre la liaison de donnée CX2 accessible au point de paiement virtuel VPj ;

Le canal P2 est ensuite fermé au moyen d'une commande "PIPE_CLOSE". Cette étape peut être conduite par le programme de connexion CXP, comme représenté. Alternativement, cette étape peut être conduite par le point de paiement virtuel VPj lui-même, si celui-ci comporte un programme de gestion de l'interface HCI, ou par le dispositif de sécurité SDV.

Le système de transaction représenté sur la figure 9 est lui-même susceptible de diverses variantes. Par exemple, la carte sans contact CC1 peut être remplacée par un autre dispositif portable HD2' qui fonctionne dans le mode émulation de carte, tel que précédemment décrit en relation avec les figures 5 et 6. Si le même serveur SV1 gère à la fois des applications carte et des applications point de paiement, les deux dispositifs portable HD2, HD2' se trouvant face à face peuvent exécuter une transaction, l'un en tant que carte, ou payeur, l'autre en tant que point de paiement, ou receveur, tout en étant connectés simultanément au même serveur SV1. Un système de transaction selon l'invention peut donc permettre de réaliser des transactions privées, par exemple un transfert d'une somme d'argent d'une personne à une autre au moyen de leurs téléphones portables.

Enfin, il sera noté que le dispositif HD2 utilisé dans ce qui précède pour conduire une transaction avec un dispositif de transaction tel que le terminal TT (Fig. 4) ou la carte sans contact CC1 (Fig. 9), peut être autre chose qu'un téléphone mobile, un PDA ou autre objet portatif généralement utilisé à d'autres fins que des transactions à champ proche. Ainsi, dans des modes de réalisation, le dispositif HD2 peut être entièrement dédié à la conduite de transactions à champ proche et comprendre un contrôleur simplifié à bas coût équipé de moyens de communication à champ proche et de moyens de connexion au serveur et essentiellement configuré pour agir en tant que relais de proximité entre le serveur et le dispositif de transaction. Afin de permettre à l'utilisateur de faire un choix entre les services de transaction proposés par le serveur, un tel dispositif à bas coût peut être équipé d'un clavier et d'un écran simplifiés comprenant des fonctionnalités minimales permettant à l'utilisateur de faire ces choix. Dans certains modes de réalisation, ce "dispositif relais" à bas coût peut ne comporter aucun moyen pour interfacer avec l'utilisateur, le choix de la carte virtuelle appropriée étant effectué automatiquement par le serveur lui-même au moment de la transaction. Dans ce cas, il peut être proposé à l'utilisateur de se connecter au serveur au moyen d'un autre dispositif, par exemple un ordinateur personnel, pour configurer le portefeuille de cartes virtuelles ou de points de paiement virtuels dont il dispose, en y ajoutant ou en y supprimant des cartes ou des points de paiements.

## Revendications

1. Procédé pour conduire une transaction à champ proche avec un premier dispositif de transaction (TT, CIC, CC1, HD2') dans lequel :
- le premier dispositif de transaction comprend des moyens de communication à champ proche (AC1, AC2) et est configuré pour, pendant la conduite de la transaction, recevoir, traiter et émettre des unités de données de protocole d'application (APDU, CAPDU, RAPDU),
- la transaction comprend un échange d'unités de données de protocole d'application (APDU, CAPDU, RAPDU) avec le dispositif de transaction,
- le procédé est mis en oeuvre au moyen d'un premier dispositif portable (HD2) et d'un serveur de transaction (SV1) accessible via le réseau Internet,
- le premier dispositif portable (HD2) et le premier dispositif de transaction comprennent chacun des moyens de communication à champ proche (NFCC, AC3),
- le premier dispositif portable (HD2) comprend en outre des moyens de communication sans fil (WCCT) pour la connexion au serveur de transaction (SV1) via le réseau Internet et un processeur (PROC1),
procédé **caractérisé en ce qu'**il comprend les étapes consistant à :
- installer dans une zone mémoire du serveur au moins un programme application (CAPj, PAPj) configuré pour :
recevoir et traiter les unités de données de protocole d'application (CAPDU, RAPDU) de la transaction émises par le premier dispositif de transaction (TT, CIC, CC1) via les moyens de communication à champ proche (NFCC, AC1, AC2, AC3) et les moyens de communication sans fil (WCCT) du premier dispositif portable (HD2), et
émettre des unités de données de protocole d'application (RAPDU, CAPDU) concernant la transaction au premier dispositif de transaction (TT, CIC, CC1) via les moyens de communication sans fil (WCCT) du premier dispositif portable (HD2) et les moyens de communication à champ proche (NFCC, AC1, AC2, AC3), le programme application (CAPj, PAPj) étant configuré pour émuler une carte à puce (CAPj) au cas où le premier dispositif de transaction est un terminal de transaction (TT), ou le programme application (CAPj, PAPj) étant configuré pour émuler un point de paiement (PAPj) au cas où le premier dispositif de transaction est une carte à puce (CIC, CC1) ou un second dispositif portable (HD2') dans un mode émulation carte à puce, et
- au moyen du premier dispositif portable (HD2) :
- établir une liaison de données (CX2) entre le serveur de transaction (SV1) et les moyens de communication à champ proche (NFCC, AC3) du premier dispositif portable, par l'intermédiaire des moyens de communication sans fil (WCCT) et via le réseau Internet,
- établir un canal de communication à champ proche (RFCH) entre le premier dispositif portable (HD2) et le premier dispositif de transaction (TT, CIC, CC1), et
- recevoir les unités de données de protocole d'application (CAPDU, RAPDU) émises par le premier dispositif de transaction via le canal de communication à champ proche (RFCH) et les transférer au programme application (CAPj, PAPj) du serveur de transaction (SV1) via la liaison de données (CX2), et
- recevoir les unités de données de protocole d'application (RAPDU, CAPDU) émises par le programme application (CAPj, PAPj) du serveur et les transférer au premier dispositif de transaction (TT, CIC, CC1) via le canal de communication à champ proche (RFCH), et ainsi conduire la transaction avec le premier dispositif de transaction (TT) au moyen du programme application (CAPj, PAPj) en utilisant les moyens de communication à champ proche (NFCC, AC3) du premier dispositif portable (HD2) comme un relais de proximité, sans passer par le processeur (PROC1) du premier dispositif portable, permettant au programme application de communiquer avec le premier dispositif de transaction (TT),
**caractérisé en outre en ce que** toutes les unités de données de protocole d'application sont définies selon la norme ISO 7816-4.

2. Procédé selon la revendication 1, comprenant les étapes consistant à :
- prévoir dans le serveur une zone mémoire (SM) allouée à un utilisateur (USRi),
- installer dans la zone mémoire allouée plusieurs programmes application (CAP1, CAPm, PAP1, PAPm) configurés chacun pour émuler un second dispositif de transaction (VCj, VPj),
- sélectionner (S7) un programme application dans la zone mémoire et l'utiliser pour conduire la transaction avec le premier dispositif de transaction.

3. Procédé selon la revendication 2, comprenant l'étape consistant à configurer le serveur pour qu'il sélectionne automatiquement le programme application dans la mémoire allouée à l'utilisateur, en fonction d'une unité de donnée de protocole d'application (CAPDU) fournie par le premier dispositif de transaction.

4. Procédé selon l'une des revendications 2 et 3, dans lequel l'installation d'un programme application dans la zone mémoire allouée comporte une étape (S33) consistant à requérir une autorisation auprès d'un serveur de certification (BSV).

5. Procédé selon l'une des revendications 2 à 4, dans lequel l'installation d'un programme application dans la zone mémoire allouée à l'utilisateur comprend une étape (S34) consistant à recevoir d'un serveur de certification (BSV) une clé de cryptographie (Kj) attribuée au programme application, et une étape (S35) d'installation de la clé.

6. Procédé selon l'une des revendications 1 à 5, dans lequel le premier dispositif de transaction est le second dispositif portable (HD2') relié au serveur de transaction (SV1), et dans lequel la transaction est conduite entre un premier programme application (CAPi) exécuté par le serveur et un second programme application (PAPj) exécuté par le serveur.

7. Système de transaction à champ proche, comprenant :
- un premier dispositif de transaction (TT, CIC, CC1, HD2') comprenant des moyens de communication à champ proche (AC1, AC2)) et configuré pour, pendant la conduite de la transaction, recevoir, traiter et émettre des unités de données de protocole d'application (APDU, CAPDU, RAPDU), la transaction comprenant un échange d'unités de données de protocole d'application (APDU, CAPDU, RAPDU) avec le premier dispositif de transaction,
- un premier dispositif portable (HD2) et un serveur de transaction (SV1) accessible via le réseau Internet, le premier dispositif portable (HD2) comprenant des moyens de communication à champ proche (NFCC, AC3), des moyens de communication sans fil (WCCT) pour la connexion serveur de transaction (SV1) via le réseau Internet et un processeur (PROC1), et
système **caractérisé en ce que** le serveur de transaction comprend au moins un programme application (CAPj, PAPj) installé dans une zone mémoire du serveur et configuré pour :
- recevoir et traiter les unités de données de protocole d'application (CAPDU, RAPDU) de la transaction émises par le premier dispositif de transaction (TT, CIC, CC1) via les moyens de communication à champ proche (NFCC, AC1, AC2, AC3) et les moyens de communication sans fil (WCCT) du premier dispositif portable (HD2), et
- émettre des unités de données de protocole d'application (RAPDU, CAPDU) concernant la transaction au premier dispositif de transaction (TT, CIC, CC1) via les moyens de communication sans fil (WCCT) du premier dispositif portable (HD2) et les moyens de communication à champ proche (NFCC, AC1, AC2, AC3), le programme application (CAPj, PAPj) étant configuré pour émuler une carte à puce (CAPj) au cas où le premier dispositif de transaction est un terminal de transaction (TT), ou le programme application (CAPj, PAPj) étant configuré pour émuler un point de paiement (PAPj) au cas où le premier dispositif de transaction est une carte à puce (CIC, CC1) ou un second dispositif portable (HD2') dans un mode émulation de carte à puce,
et **en ce que** le premier dispositif portable (HD2) est configuré pour :
- établir une liaison de données (CX2) entre le serveur de transaction (SV1) et les moyens de communication à champ proche (NFCC, AC3) du premier dispositif portable, par l'intermédiaire des moyens de communication sans fil (WCCT) et via le réseau Internet,
- établir un canal de communication à champ proche (RFCH) entre le premier dispositif portable (HD2) et le premier dispositif de transaction (TT, CIC, CC1),
- recevoir les unités de données de protocole d'application (CAPDU, RAPDU) émises par le premier dispositif de transaction (TT, CC1) via le canal de communication à champ proche (RFCH) et les transférer au programme application (CAPj, PAPj) du serveur de transaction (SV1) via la liaison de données (CX2), et
- recevoir les unités de données de protocole d'application (RAPDU, CAPDU) émises par le programme application (CAPj, PAPj) du serveur de transaction (SV1) via le canal de communication à champ proche (RFCH) et les transférer au premier dispositif de transaction (TT, CC1) via le canal de communication à champ proche (RFCH),
de telle sorte que le programme application (CAPj, PAPj) puisse conduire une transaction avec le premier dispositif de transaction (TT) en utilisant les moyens de communication à champ proche (NFCC, AC3) du premier dispositif portable (HD2) comme un relais de proximité, sans passer par le processeur (PROC1) du premier dispositif portable, pour communiquer avec le premier dispositif de transaction (TT), **caractérisé en outre en ce que** toutes les unités de données de protocole d'application sont définies selon la norme ISO 7816-4.

8. Système selon la revendication 7, dans lequel le serveur comprend une zone mémoire (SM) allouée à un utilisateur (USRi) et comportant plusieurs programmes application (CAP1, CAPm, PAP1, PAPm) configurés chacun pour émuler un second dispositif de transaction (VCj, VPj).

9. Système selon la revendication 8, dans lequel le serveur est configuré pour sélectionner automatiquement le programme application dans la mémoire allouée à l'utilisateur, en fonction d'une unité de donnée de protocole d'application (CAPDU) fournie par le premier dispositif de transaction.

10. Système selon l'une des revendications 7 à 9, dans lequel le premier dispositif portable (HD2) est un dispositif exclusivement dédié à la conduite de transactions.

11. Système selon l'une des revendications 7 à 10, dans lequel le premier dispositif portable (HD2) est un téléphone mobile ou un assistant personnel.

## Patentansprüche

1. Verfahren zum Ausführen einer Nahfeldtransaktion mit einer ersten Transaktionsvorrichtung (TT, CIC, CC1, HD2'), wobei:
- die erste Transaktionsvorrichtung Nahfeld-Kommunikationsmittel (AC1, AC2) umfasst und dafür konfiguriert ist, während des Ausführens der Transaktion Anwendungsprotokoll-Dateneinheiten (APDU, CAPDU, RAPDU) zu empfangen, zu verarbeiten und auszugeben,
- die Transaktion einen Austausch von Anwendungsprotokoll-Dateneinheiten (APDU, CAPDU, RAPDU) mit der Transaktionsvorrichtung umfasst,
- das Verfahren mittels einer ersten tragbaren Vorrichtung (HD2) und eines Transaktionsservers (SV1), der über das Internet zugänglich ist, ausgeführt wird,
- die erste tragbare Vorrichtung (HD2) und die erste Transaktionsvorrichtung jeweils Nahfeld-Kommunikationsmittel (NFCC, AC3) umfassen,
- die erste tragbare Vorrichtung (HD2) des Weiteren drahtlose Kommunikationsmittel (WCCT) zum Anschluss an den Transaktionsserver (SV1) über das Internet und einen Prozessor (PROC1) umfasst,
wobei das Verfahren **dadurch gekennzeichnet ist, dass** es die folgenden Schritte umfasst:
- Einrichten, in einem Speicherbereich des Servers, mindestens eines Anwendungsprogramms (CAPj, PAPj), das dafür konfiguriert ist:
die Anwendungsprotokoll-Dateneinheiten (CAPDU, RAPDU) der Transaktion, die von der ersten Transaktionsvorrichtung (TT, CIC, CC1) ausgegeben werden, über die Nahfeld-Kommunikationsmittel (NFCC, AC1, AC2, AC3) und die drahtlosen Kommunikationsmittel (WCCT) der ersten tragbaren Vorrichtung (HD2) zu empfangen und zu verarbeiten, und Anwendungsprotokoll-Dateneinheiten (RAPDU, CAPDU) betreffend die Transaktion über die drahtlosen Kommunikationsmittel (WCCT) der ersten tragbaren Vorrichtung (HD2) und die Nahfeld-Kommunikationsmittel (NFCC, AC1, AC2, AC3) an die erste Transaktionsvorrichtung (TT, CIC, CC1) auszugeben,
wobei das Anwendungsprogramm (CAPj, PAPj) dafür konfiguriert ist, eine Chipkarte (CAPj) zu emulieren, falls die erste Transaktionsvorrichtung ein Transaktionsterminal (TT) ist, oder das Anwendungsprogramm (CAPj, PAPj) dafür konfiguriert ist, eine Zahlstelle (PAPj) zu emulieren, falls die erste Transaktionsvorrichtung eine Chipkarte (CIC, CC1) oder eine zweite tragbare Vorrichtung (HD2') in einem Chipkarten-Emulationsmodus ist, und
- mittels der ersten tragbaren Vorrichtung (HD2):
- Erstellen einer Datenverbindung (CX2) zwischen dem Transaktionsserver (SV1) und den Nahfeld-Kommunikationsmitteln (NFCC, AC3) der ersten tragbaren Vorrichtung durch die drahtlosen Kommunikationsmittel (WCCT) und über das Internet,
- Erstellen eines Nahfeld-Kommunikationskanals (RFCH) zwischen der ersten tragbaren Vorrichtung (HD2) und der ersten Transaktionsvorrichtung (TT, CIC, CC1), und
- Empfangen der von der ersten Transaktionsvorrichtung ausgegebenen Anwendungsprotokoll-Dateneinheiten (CAPDU, RAPDU) über den Nahfeld-Kommunikationskanal (RFCH) und Übertragen dieser an das Anwendungsprogramm (CAPj, PAPj) des Transaktionsservers (SV1) über die Datenverbindung (CX2), und
- Empfangen der von dem Anwendungsprogramm (CAPj, PAPj) des Servers ausgegebenen Anwendungsprotokoll-Dateneinheiten (RAPDU, CAPDU) und Übertragen dieser an die erste Transaktionsvorrichtung (TT, CIC, CC1) über den Nahfeld-Kommunikationskanal (RFCH) und somit Ausführen der Transaktion mit der ersten Transaktionsvorrichtung (TT) mittels des Anwendungsprogramms (CAPj, PAPj) unter Verwendung der Nahfeld-Kommunikationsmittel (NFCC, AC3) der ersten tragbaren Vorrichtung (HD2) als Näherungsrelais, ohne über den Prozessor (PROC1) der ersten tragbaren Vorrichtung zu gehen, wodurch das Anwendungsprogramm mit der ersten Transaktionsvorrichtung (TT) kommunizieren kann,
des Weiteren **dadurch gekennzeichnet, dass** alle Anwendungsprotokoll-Dateneinheiten gemäß der ISO-Norm 7816-4 definiert sind.

2. Verfahren nach Anspruch 1, umfassend die folgenden Schritte:
- Bereitstellen eines Speicherbereichs (SM) in dem Server, der einem Nutzer (USRi) zugeordnet ist,
- Einrichten, in dem zugeordneten Bereich, von mehreren Anwendungsprogrammen (CAP1, CAPm, PAP1, PAPm), die jeweils dafür konfiguriert sind, eine zweite Transaktionsvorrichtung (VCj, VPj) zu emulieren,
- Auswählen (S7) eines Anwendungsprogramms in dem Speicherbereich und Nutzen von diesem, um die Transaktion mit der ersten Transaktionsvorrichtung auszuführen.

3. Verfahren nach Anspruch 2, umfassend den Schritt, der daraus besteht, den Server so zu konfigurieren, dass er in dem dem Nutzer zugeordneten Speicher in Abhängigkeit einer Anwendungsprotokoll-Dateneinheit (CAPDU), die von der ersten Transaktionsvorrichtung geliefert wird, automatisch das Anwendungsprogramm auswählt.

4. Verfahren nach einem der Ansprüche 2 und 3, wobei die Einrichtung eines Anwendungsprogramms in dem zugeordneten Speicherbereich einen Schritt (S33) enthält, der darin besteht, bei einem Zertifizierungsserver (BSV) eine Berechtigung anzufordern.

5. Verfahren nach einem der Ansprüche 2 bis 4, wobei die Einrichtung eines Anwendungsprogramms in dem dem Nutzer zugeordneten Speicherbereich einen Schritt (S34), der darin besteht, von einem Zertifizierungsserver (BSV) einen Kryptographie-Schlüssel (Kj) zu empfangen, der dem Anwendungsprogramm zugewiesen ist, und einen Schritt (S35) zum Einrichten des Schlüssels umfasst.

6. Verfahren nach einem der Ansprüche 1 bis 5, wobei die erste Transaktionsvorrichtung die zweite tragbare Vorrichtung (HD2') ist, die mit dem Transaktionsserver (SV1) verbunden ist, und wobei die Transaktion zwischen einem ersten, von dem Server ausgeführten Anwendungsprogramm (CAPi), und einem zweiten, von dem Server ausgeführten Anwendungsprogramm (PAPj) ausgeführt wird.

7. Nahfeldtransaktionssystem, umfassend:
- eine erste Transaktionsvorrichtung (TT, CIC, CC1, HD2'), umfassend Nahfeld-Kommunikationsmittel (AC1, AC2), die dafür konfiguriert sind, während des Ausführens der Transaktion Anwendungsprotokoll-Dateneinheiten (APDU, CAPDU, RAPDU) zu empfangen, zu verarbeiten und auszugeben, wobei die Transaktion einen Austausch von Anwendungsprotokoll-Dateneinheiten (APDU, CAPDU, RAPDU) mit der ersten Transaktionsvorrichtung umfasst,
- eine erste tragbare Vorrichtung (HD2) und einen Transaktionsserver (SV1), der über das Internet zugänglich ist, wobei die erste tragbare Vorrichtung (HD2) Nahfeld-Kommunikationsmittel (NFCC, AC3), drahtlose Kommunikationsmittel (WCCT) für den Anschluss des Transaktionsservers (SV1) über das Internet und einen Prozessor (PROC1) umfasst, und wobei das System **dadurch gekennzeichnet ist, dass** der Transaktionsserver mindestens ein Anwendungsprogramm (CAPj, PAPj) umfasst, das in einem Speicherbereich des Servers eingerichtet und dafür konfiguriert ist:
- die Anwendungsprotokoll-Dateneinheiten (CAPDU, RAPDU) der Transaktion, die von der ersten Transaktionsvorrichtung (TT, CIC, CC1) ausgegeben werden, über die Nahfeld-Kommunikationsmittel (NFCC, AC1, AC2, AC3) und die drahtlosen Kommunikationsmittel (WCCT) der ersten tragbaren Vorrichtung (HD2) zu empfangen und zu verarbeiten, und
- Anwendungsprotokoll-Dateneinheiten (RAPDU, CAPDU) betreffend die Transaktion über die drahtlosen Kommunikationsmittel (WCCT) der ersten tragbaren Vorrichtung (HD2) und die Nahfeld-Kommunikationsmittel (NFCC, AC1, AC2, AC3) an die erste Transaktionsvorrichtung (TT, CIC, CC1) auszugeben, wobei das Anwendungsprogramm (CAPj, PAPj) dafür konfiguriert ist, eine Chipkarte (CAPj) zu emulieren, falls die erste Transaktionsvorrichtung ein Transaktionsterminal (TT) ist, oder das Anwendungsprogramm (CAPj, PAPj) dafür konfiguriert ist, eine Zahlstelle (PAPj) zu emulieren, falls die erste Transaktionsvorrichtung eine Chipkarte (CIC, CC1) oder eine zweite tragbare Vorrichtung (HD2') in einem Chipkarten-Emulationsmodus ist, und
dass die erste tragbare Vorrichtung (HD2) dafür konfiguriert ist:
- eine Datenverbindung (CX2) zwischen dem Transaktionsserver (SV1) und den Nahfeld-Kommunikationsmitteln (NFCC, AC3) der ersten tragbaren Vorrichtung mittels der drahtlosen Kommunikationsmittel (WCCT) und über das Internet zu erstellen,
- einen Nahfeld-Kommunikationskanal (RFCH) zwischen der ersten tragbaren Vorrichtung (HD2) und der ersten Transaktionsvorrichtung (TT, CIC, CC1) zu erstellen,
- die von der ersten Transaktionsvorrichtung (TT, CC1) ausgegebenen Anwendungsprotokoll-Dateneinheiten (CAPDU, RAPDU) über den Nahfeld-Kommunikationskanal (RFCH) zu empfangen und diese über die Datenverbindung (CX2) an das Anwendungsprogramm (CAPj, PAPj) des Transaktionsservers (SV1) zu übertragen, und
- die von dem Anwendungsprogramm (CAPj, PAPj) des Transaktionsservers (SV1) ausgegebenen Anwendungsprotokoll-Dateneinheiten (RAPDU, CAPDU) über den Nahfeld-Kommunikationskanal (RFCH) zu empfangen und über den Nahfeld-Kommunikationskanal (RFCH) an die erste Transaktionsvorrichtung (TT, CC1) zu übertragen, so dass das Anwendungsprogramm (CAPj, PAPj) unter Verwendung der Nahfeld-Kommunikationsmittel (NFCC, AC3) der ersten tragbaren Vorrichtung (HD2) als Näherungsrelais eine Transaktion mit der ersten Transaktionsvorrichtung (TT) ausführen kann, ohne über den Prozessor (PROC1) der ersten tragbaren Vorrichtung (HD2) zu gehen, um mit der ersten Transaktionsvorrichtung (TT) zu kommunizieren,
des Weiteren **dadurch gekennzeichnet, dass** alle Anwendungsprotokoll-Dateneinheiten gemäß der ISO-Norm 7816-4 definiert sind.

8. System nach Anspruch 7, wobei der Server einen Speicherbereich (SM) umfasst, der einem Nutzer (USRi) zugeordnet ist und mehrere Anwendungsprogramme (CAP1, CAPm, PAP1, PAPm) umfasst, die jeweils dafür konfiguriert sind, eine zweite Transaktionsvorrichtung (VCj, VPj) zu emulieren.

9. System nach Anspruch 8, wobei der Server dafür konfiguriert ist, in dem dem Nutzer zugeordneten Speicher in Abhängigkeit von einer Anwendungsprotokoll-Dateneinheit (CAPDU), die von der ersten Transaktionsvorrichtung geliefert wird, automatisch das Anwendungsprogramm auszuwählen.

10. System nach einem der vorhergehenden Ansprüche 7 bis 9, wobei die erste tragbare Vorrichtung (HD2) eine Vorrichtung ist, die ausschließlich zum Ausführen von Transaktionen bestimmt ist.

11. System nach einem der vorhergehenden Ansprüche 7 bis 10, wobei die erste tragbare Vorrichtung (HD2) ein Mobiltelefon oder ein Personal Assistant ist.

## Claims

1. Method for conducting a near-field transaction with a first transaction device (TT, CIC, CC1, HD2'), in which:
- the first transaction device comprises near-field communication means (AC1, AC2) and is configured for receiving, processing and transmitting application protocol data units (APDU, CAPDU, RAPDU) during the transaction,
- the transaction comprises an exchange of application protocol data units (APDU, CAPDU, RAPDU) with the transaction device,
- the method is implemented by means of a first portable device (HD2) and a transaction server (SV1) that can be accessed via the Internet,
- the first portable device (HD2) and the first transaction device each comprise near-field communication means (NFCC, AC3),
- the first portable device (HD2) further comprises wireless communication means (WCCT) for connecting to the transaction server (SV1) via the Internet, and a processor (PROC1),
the method being **characterized in that** it comprises the steps of:
- installing, in a memory region of the server, at least one application program (CAPj, PAPj) configured for:
receiving and processing the application protocol data units (CAPDU, RAPDU) of the transaction that are transmitted by the first transaction device (TT, CIC, CC1) via the near-field communication means (NFCC, AC1, AC2, AC3) and the wireless communication means (WCCT) of the first portable device (HD2), and
transmitting application protocol data units (RAPDU, CAPDU) relating to the transaction to the first transaction device (TT, CIC, CC1) via the wireless communication means (WCCT) of the first portable device (HD2) and the near-field communication means (NFCC, AC1, AC2, AC3),
the application program (CAPj, PAPj) being configured for emulating a smart card (CAPj) if the first transaction device is a transaction terminal (TT),
or the application program (CAPj, PAPj) being configured for emulating a point of payment (PAPj) if the first transaction device is a smart card (CIC, CC1) or a second portable device (HD2') in a smart-card emulation mode,
and,
- by means of the first portable device (HD2):
- establishing a data link (CX2) between the transaction server (SV1) and the near-field communication means (NFCC, AC3) of the first portable device by means of the wireless communication means (WCCT) and via the Internet,
- establishing a near-field communication channel (RFCH) between the first portable device (HD2) and the first transaction device (TT, CIC, CC1),
- receiving the application protocol data units (CAPDU, RAPDU) transmitted by the first transaction device via the near-field communication channel (RFCH) and transferring them to the application program (CAPj, PAPj) of the transaction server (SV1) via the data link (CX2), and
- receiving the application protocol data units (RAPDU, CAPDU) transmitted by the application program (CAPj, PAPj) of the server and transferring them to the first transaction device (TT, CIC, CC1) via the near-field communication channel (RFCH), and thus conducting the transaction with the first transaction device (TT) by means of the application program (CAPj, PAPj) using the near-field communication means (NFCC, AC3) of the first portable device (HD2) as a local relay, without passing through the processor (PROC1) of the first portable device, allowing the application program to communicate with the first transaction device (TT),
also **characterized in that** all the application protocol data units are defined according to the ISO 7816-4 standard.

2. Method according to claim 1, comprising the steps of:
- providing, in the server, a memory region (SM) allocated to a user (USRi),
- installing, in the allocated memory region, a plurality of application programs (CAP1, CAPm, PAP1, PAPm) of which each is configured for emulating a second transaction device (VCj, VPj),
- selecting (S7) an application program in the memory region and using said application program for conducting the transaction with the first transaction device.

3. Method according to claim 2, comprising the step of configuring the server so that it automatically selects the application program in the memory allocated to the user, on the basis of an application protocol data unit (CAPDU) provided by the first transaction device.

4. Method according to either claim 2 or claim 3, wherein installing an application program in the allocated memory region comprises a step (S33) of requesting authorization from a certification server (BSV).

5. Method according to any of claims 2 to 4, wherein installing an application program in the memory region allocated to the user comprises a step (S34) of receiving, from a certification server (BSV), a cryptographic key (Kj) that is assigned to the application program, and a step (S35) of installing the key.

6. Method according to any of claims 1 to 5, wherein the first transaction device is the second portable device (HD2') that is connected to the transaction server (SV1), and wherein the transaction is conducted between a first application program (CAPi) run by the server and a second application program (PAPj) run by the server.

7. Near-field transaction system comprising:
- a first transaction device (TT, CIC, CC1, HD2') comprising near-field communication means (AC1, AC2) and configured for receiving, processing and transmitting application protocol data units (APDU, CAPDU, RAPDU) during the transaction, the transaction comprising an exchange of application protocol data units (APDU, CAPDU, RAPDU) with the first transaction device,
- a first portable device (HD2) and a transaction server (SV1) that can be accessed via the Internet, the first portable device (HD2) comprising near-field communication means (NFCC, AC3), wireless communication means (WCCT) for connecting to the transaction server (SV1) via the Internet, and a processor (PROC1),
the system being **characterized in that** the transaction server comprises at least one application program (CAPj, PAPj) installed in a memory region of the server and configured for:
- receiving and processing the application protocol data units (CAPDU, RAPDU) of the transaction that are transmitted by the first transaction device (TT, CIC, CC1) via the near-field communication means (NFCC, AC1, AC2, AC3) and the wireless communication means (WCCT) of the first portable device (HD2), and
- transmitting application protocol data units (RAPDU, CAPDU) relating to the transaction to the first transaction device (TT, CIC, CC1) via the wireless communication means (WCCT) of the first portable device (HD2) and the near-field communication means (NFCC, AC1, AC2, AC3),
the application program (CAPj, PAPj) being configured for emulating a smart card (CAPj) if the first transaction device is a transaction terminal (TT),
or the application program (CAPj, PAPj) being configured for emulating a point of payment (PAPj) if the first transaction device is a smart card (CIC, CC1) or a second portable device (HD2') in a smart-card emulation mode,
and **in that** the first portable device (HD2) is configured for:
- establishing a data link (CX2) between the transaction server (SV1) and the near-field communication means (NFCC, AC3) of the first portable device by means of the wireless communication means (WCCT) and via the Internet,
- establishing a near-field communication channel (RFCH) between the first portable device (HD2) and the first transaction device (TT, CIC, CC1),
- receiving the application protocol data units (CAPDU, RAPDU) transmitted by the first transaction device (TT, CC1) via the near-field communication channel (RFCH) and transferring them to the application program (CAPj, PAPj) of the transaction server (SV1) via the data link (CX2), and
- receiving the application protocol data units (RAPDU, CAPDU) transmitted by the application program (CAPj, PAPj) of the transaction server (SV1) via the near-field communication channel (RFCH) and transferring them to the first transaction device (TT, CC1) via the near-field communication channel (RFCH), such that the application program (CAPj, PAPj) can conduct a transaction with the first transaction device (TT) using the near-field communication means (NFCC, AC3) of the first portable device (HD2) as a local relay, without passing through the processor (PROC1) of the first portable device, so as to communicate with the first transaction device (TT),
also **characterized in that** all the application protocol data units are defined according to the ISO 7816-4 standard.

8. System according to claim 7, wherein the server comprises a memory region (SM) that is allocated to a user (USRi) and comprises a plurality of application programs (CAP1, CAPm, PAP1, PAPm) of which each is configured for emulating a second transaction device (VCj, VPj).

9. System according to claim 8, wherein the server is configured for automatically selecting the application program in the memory allocated to the user, on the basis of an application protocol data unit (CAPDU) provided by the first transaction device.

10. System according to any of claims 7 to 9, wherein the first portable device (HD2) is a device dedicated exclusively to conducting transactions.

11. System according to any of claims 7 to 10, wherein the first portable device (HD2) is a mobile telephone or a personal digital assistant.
